# EUROPEAN PATENT APPLICATION

(11) **EP 4 647 759 A1**
(43) Date of publication of application: **12.11.2025**
(21) Application number: 25174633.5
(22) Date of filing: 06.05.2025
(51) Int. Cl.: G01N 29/22, G01N 29/24

(54) **INSPECTING INTERNAL POWERPLANT COMPONENT USING ADHERED INSPECTION DEVICE(S)**

(30) Priority: 06.05.2024 US 202418656047
(71) Applicant: RTX Corporation, Farmington, CT 06032 (US)
(72) Inventor: HERRING, Neil R., Glastonbury, CT 06033 (US); SHARON, John A., West Hartford, CT 06119 (US)
(74) Representative: Dehns

(57) **Abstract**

An inspection method is provided during which an inspection device (28) is inserted into an interior (26) of a powerplant (24) using a tool (30, 36). The inspection device (28) includes an actuator (40). The powerplant (24) includes a component (22) disposed within the interior (26) of the powerplant (24). The inspection device (28) is adhered to the component (22) within the interior (26) of the powerplant (24). Vibrations are induced in the component (22) using the actuator (40). A vibratory response is measured in the component (22) excited by the vibrations using a sensor (42) to provide sensor data. A characteristic of the component (22) is determined based on the sensor data.

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present invention, an inspection method is provided during which an inspection device is inserted into an interior of a powerplant using a tool. The inspection device includes an actuator. The powerplant includes a component disposed within the interior of the powerplant. The inspection device is adhered to the component within the interior of the powerplant. Vibrations are induced in the component using the actuator. A vibratory response is measured in the component excited by the vibrations using a sensor to provide sensor data. A characteristic of the component is determined based on the sensor data.

According to another aspect of the present invention, another method is provided during which an inspection device is arranged next to a powerplant component using an inspection scope. The inspection device is coupled to a head of the inspection scope. The inspection device includes an actuator. The inspection device is adhered to the powerplant component using an adhesive. Vibrations are induced in the powerplant component using the actuator. A vibratory response is measured in the powerplant component excited by the vibrations using a sensor to provide sensor data. Whether or not the powerplant component comprises an internal defect is determined based on the sensor data. The inspection device is removed from the powerplant component prior to operating a powerplant with the powerplant component.

According to still another aspect of the present invention, another method is provided during which an inspection device is arranged next to a powerplant component using a tool. The inspection device includes an actuator. The inspection device is adhered to the powerplant component using an adhesive. The tool is disengaged from the inspection device. Vibrations are induced in the powerplant component using the actuator. A vibratory response is measured in the powerplant component excited by the vibrations using a sensor to provide sensor data. A defect internal to the powerplant component is detected using the sensor data.

The actuator may be configured as or otherwise include a piezoelectric device.

The sensor may be configured as or otherwise include a piezoelectric device.

The inspection device may also include the sensor.

The sensor may be configured discrete from the inspection device.

The inspection method may also include: inserting the sensor into the interior of the powerplant using the tool or another tool; and adhering the sensor to the component within the interior of the powerplant.

The inspection device may be configured as a disposable patch.

The inspection method may also include disengaging the tool from the inspection device following the adhering of the inspection device and prior to the inducing of the vibrations.

The inspection method may also include removing the inspection device from the component following the measuring of the vibratory response.

The inspection device may be pulled off of the component using the tool.

The inspection device may be pulled off of the component using one or more electrical leads connected to the inspection device.

The removing of the inspection device may include applying a solvent onto an adhesive adhering the inspection device to the component.

The inspection method may also include breaking away one or more electrical leads from the inspection device following the measuring of the vibratory response.

The characteristic may be indicative of presence of a defect internal to the component.

The powerplant may be configured as or otherwise include a turbine engine.

The component may be configured as a rotor disk.

The powerplant may be installed with an aircraft during the inserting, the adhering, the inducing and the measuring.

The tool may be configured as or otherwise include an inspection scope. The inspection device may be coupled to a head of the inspection scope during the arranging of the inspection device and the adhering of the inspection device.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant with an inspection device being positioned by a tool.
FIG. 2 is a flow diagram of a method for inspecting a component of a powerplant.
FIGS. 3A-C are schematic sectional illustrations of various arrangements of the inspection device adhered to the component.
FIG. 4 is a schematic illustration of the assembly of FIG. 1 with the inspection device disengaged from the tool.
FIGS. 5A and 5B are graphs of various measured resonant signatures compared to a model resonant signature.
FIG. 6 is a schematic sectional illustration of the inspection device adhered to the component and broken away from its electrical leads.
FIG. 7 is a schematic sectional illustration of the inspection device adhered to the component and configured with a single actuator-sensor device.
FIG. 8 is a schematic sectional illustration of an actuator inspection device and a sensor inspection device adhered to the component.

### DETAILED DESCRIPTION

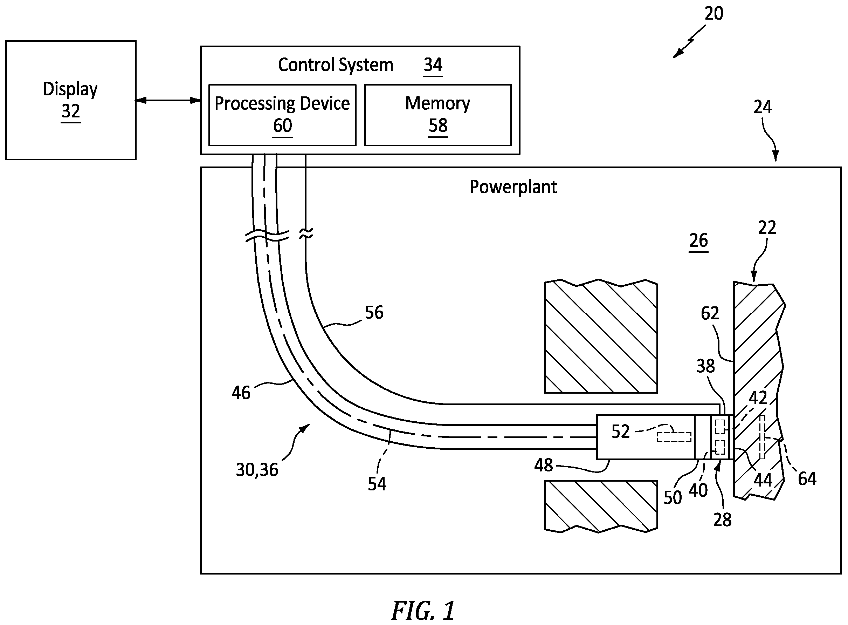

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 of FIG. 1 includes an inspection device 28, an inspection device placement and/or removal tool 30, a display 32 (e.g., a screen, a monitor, a touch screen, etc.) and a control system 34. For ease of description, the tool 30 is described below as an electronic inspection scope 36 such as a flexible borescope. It is contemplated, however, the tool 30 may alternatively be configured as another type of tool capable of placing the inspection device 28 with and/or removing the inspection device 28 from the powerplant component 22; e.g., a rigid extension with a gripping head.

The inspection device 28 may be configured as or otherwise include an adhesive inspection patch. The inspection device 28 of FIG. 1, for example, includes a carrier 38, a vibration actuator 40, a vibration sensor 42 and an adhesive 44.

The vibration actuator 40 and the vibration sensor 42 of FIG. 1 are arranged with and attached to the carrier 38. The vibration actuator 40 and/or the vibration sensor 42, for example, may be mount to, embedded within, integrated with and/or otherwise fixed to the carrier 38. The vibration actuator 40 is configured to induce vibrations in the powerplant component 22 based on a control signal received from the control system 34. The vibration sensor 42 is configured to measure a vibratory response in the powerplant component 22 excited by the vibrations induced by the vibration actuator 40. The vibration sensor 42 is further configured to provide sensor data (e.g., an output signal or signals) to the control system 34 indicative of the measured vibratory response.

The vibration actuator 40 and/or the vibration sensor 42 may each be configured as or otherwise include a piezoelectric device. Examples of the piezoelectric device include, but are not limited to, a piezoelectric stack and a single crystal piezoelectric device. The piezoelectric stack may include a longitudinal stack (or multiple layers) of piezoelectric actuators. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 40 may be configured as another type of electromechanical device operable to induce vibrations and/or the vibration sensor 42 may be configured as another type of electromechanical device operable to measure the vibratory response.

The adhesive 44 covers at least a portion or an entirety of an exterior surface, of any one, some or all of the inspection device members 38, 40 and/or 42, which will face and engage (through the adhesive 44) the powerplant component 22 during the inspection of the powerplant component 22. The adhesive 44 may thereby adhere the inspection device member(s) 38, 40 and/or 42 to the powerplant component 22 during the inspection of the powerplant component 22. The adhesive 44 may be an epoxy, a glue, a contact cement, a wax, an ultraviolet (UV) curable adhesive, a double sided tape, or any other sticky or otherwise adherent substance which may temporarily or removably bond the inspection device member(s) to the powerplant component 22.

The inspection scope 36 (the tool 30) of FIG. 1 includes a scope body 46 (e.g., a tether), a scope head 48, an inspection device mount 50 and a scope sensor 52. The scope body 46 extends longitudinally along a longitudinal centerline 54 of the inspection scope 36 from a base end of the inspection scope 36 to the scope head 48. The scope body 46 is a flexible body. The scope body 46 may include one or more internal actuators for manipulating a configuration of the inspection scope 36 and its scope body 46 to aid in maneuvering the scope head 48 within the interior 26 of the aircraft powerplant 24 towards the powerplant component 22.

The scope head 48 is disposed at a distal end of the inspection scope 36. The device mount 50 and the scope sensor 52 are each arranged with the scope head 48. The device mount 50 and the scope sensor 52, for example, may each be mounted to, embedded within, integrated with and/or otherwise fixed to the scope head 48. The device mount 50 and/or the scope sensor 52 may also each be disposed at (e.g., on, adjacent or proximate) the scope distal end.

The device mount 50 is configured to hold the inspection device 28 for the placement and/or removal of the inspection device 28 with the powerplant component 22. The device mount 50 of FIG. 1, for example, removably couples the inspection device 28 to the scope head 48 at the scope distal end. Examples of the device mount 50 include, but are not limited to, a suction device, a mechanical gripping device, an actuatable latch, an electromagnetic actuator, etc.

The scope sensor 52 is configured to aid in the maneuvering of the scope head 48 and, more particularly, the inspection device 28 within the interior 26 of the aircraft powerplant 24 towards the powerplant component 22. The scope sensor 52, for example, may be configured as a camera (e.g., a still image camera and/or a video camera), a proximity sensor, or the like which (e.g., in real time) locates the scope head 48 and/or the inspection device 28 (coupled to the scope head 48 by the device mount 50) during the maneuvering of the scope head 48, within the interior 26 of the aircraft powerplant 24, towards the powerplant component 22.

The control system 34 is configured in signal communication (e.g., hardwired and/or wirelessly coupled) with the inspection device 28, the inspection scope 36 (the tool 30) as well as the display 32. The control system 34 of FIG. 1, for example, is in signal communication with the inspection device 28 and its members 40 and/or 42 through one or more electrical leads 56 (schematically shown as one line in FIG. 1); e.g., electrical wires. These electrical leads 56 may be discrete from and outside of the inspection scope 36. Alternatively, the electrical leads 56 may be run through an internal bore of the inspection scope 36 to protect those electrical leads 56 while the inspection device 28 and the scope head 48 are maneuvered within the interior 26 of the aircraft powerplant 24.

The control system 34 may be implemented with a combination of hardware and software. The hardware may include memory 58 and at least one processing device 60, which processing device 60 may include one or more single-core and/or multi-core processors. The hardware may also or alternatively include analog and/or digital circuitry other than that described above.

The memory 58 is configured to store software (e.g., program instructions) for execution by the processing device 60, which software execution may control and/or facilitate performance of one or more operations such as those described below. The memory 58 may be a non-transitory computer readable medium. For example, the memory 58 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

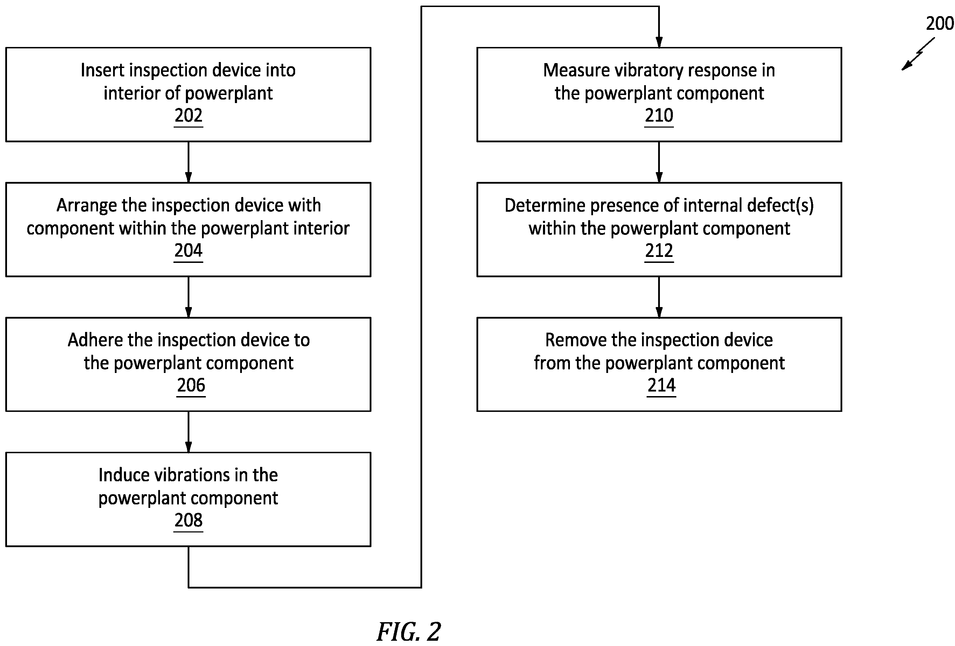

FIG. 2 is a flow diagram of a method 200 for inspecting the powerplant component 22 - a specimen component to be inspected. For ease of description, the inspection method 200 is described below with reference to the inspection system 20 of FIG. 1. The powerplant component 22 is also described below as being installed with the aircraft powerplant 24 and disposed within the interior 26 of the aircraft powerplant 24, where the aircraft powerplant 24 remains installed onboard the aircraft. The inspection method 200 of the present disclosure, however, may alternatively be performed with other inspection systems and/or while the aircraft powerplant 24 is removed from the aircraft.

In step 202, the inspection device 28 is inserted into the interior 26 of the aircraft powerplant 24. The inspection device 28, for example, may be coupled to the scope head 48 by the device mount 50. An access cover, a powerplant component and/or the like may be removed from the aircraft powerplant 24 or opened to provide an access port into the interior 26 of the aircraft powerplant 24. The scope head 48 and the coupled inspection device 28 may then be passed through the access port into the interior 26 of the aircraft powerplant 24.

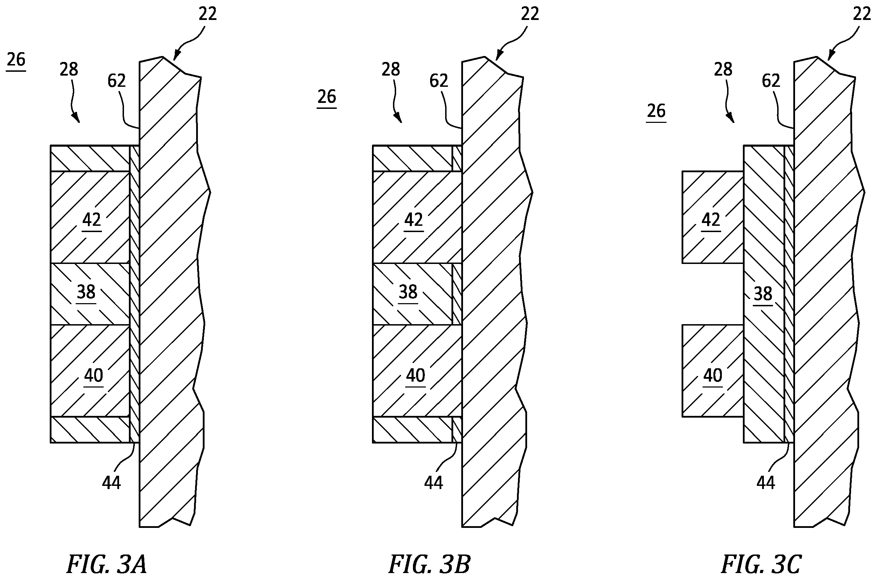

In step 204, the inspection device 28 is arranged with the powerplant component 22 within the interior 26 of the aircraft powerplant 24. The inspection scope 36 and its scope head 48, for example, may be maneuvered (e.g., passed through one or more passages, ducts, conduits, plenums, ports, etc. within the aircraft powerplant 24) to locate the scope head 48 and, more particularly, the coupled inspection device 28 next to the powerplant component 22. The inspection scope 36 and its scope head 48 may then be further maneuvered to push the coupled inspection device 28 against an exterior surface 62 of the powerplant component 22. As the inspection device 28 is moved towards the component surface 62, the adhesive 44 may adhere the inspection device 28 to the component surface 62 (a) upon the adhesive 44 contacting the component surface 62 and/or (b) upon the adhesive 44 being compressed against the component surface 62. With such an arrangement, referring to FIG. 3A, the carrier 38 as well as the vibration actuator 40 and/or the vibration sensor 42 may engage (e.g., abut against) the powerplant component 22 and its component surface 62 through the adhesive 44. Alternatively, referring to FIG. 3B, the carrier 38 may engage the powerplant component 22 and its component surface 62 through the adhesive 44, whereas the vibration actuator 40 and/or the vibration sensor 42 may project through the adhesive 44 and directly contact the powerplant component 22 and its component surface 62. Still alternatively, referring to FIG. 3C, the carrier 38 may engage the powerplant component 22 and its component surface 62 through the adhesive 44, and the vibration actuator 40 and/or the vibration sensor 42 may engage the powerplant component 22 through the carrier 38 and the adhesive 44. The present disclosure, however, is not limited to the foregoing exemplary arrangements.

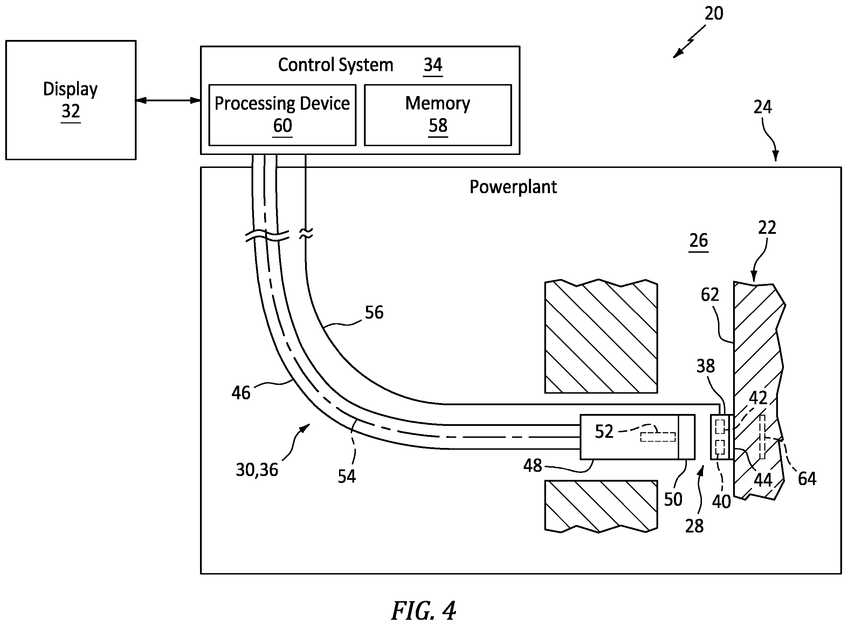

In step 206, after adhering the inspection device 28 to the powerplant component 22, the inspection scope 36 may be disengaged from the inspection device 28. For example, referring to FIG. 4, the device mount 50 may be (e.g., actively or passively) decoupled from the inspection device 28. The inspection scope 36 and its scope head 48 may then be moved (e.g., slightly) away from the inspection device 28 such that, for example, vibrations induced by the vibration actuator 40 are not transmitted into the inspection scope 36 and its scope head 48.

In step 208, vibrations are induced in the powerplant component 22 using the vibration actuator 40. The control system 34, for example, may signal the vibration actuator 40 to vibrate (e.g., via a control signal or provision of an electrical current), and the vibration of the vibration actuator 40 may be transmitted into the powerplant component 22 through an interface between the vibration actuator 40 and the component surface 62. The vibrations may be induced to sweep across a range of frequencies during the step 208. This frequency range may be a single digit frequency range; e.g., a one or two kilohertz (1-2kHz) range, a five kilohertz (5 kHz) range, etc. The frequency range may be a double digit frequency range; e.g., a ten kilohertz (10 kHz) range, a twenty kilohertz (20 kHz) range, a fifty kilohertz (50 kHz) range, etc. The frequency range may even be up to a triple digit frequency range; e.g., up to a one hundred kilohertz (100 kHz) range, or any other suitable range which will facilitate mapping of a response signature as described below.

In step 210, a vibratory response is measured in the powerplant component 22 using the vibration sensor 42. This vibratory response is induced by the vibrations transmitted into the powerplant component 22 by the vibration actuator 40. The vibration sensor 42 then generates the sensor data indicative of the measured vibratory response, and provides the sensor data to the control system 34.

In step 212, the sensor data is processed to determine whether or not the powerplant component 22 includes any internal defects 64. Herein, the term "defect" may describe a physical anomaly present within a component which may negatively affect a useful life of that component and/or performance of that component. Examples of the internal defect(s) 64 include, but are not limited to, cracks, voids, density variations, areas of poor solidification (e.g., sintering) and/or the like. In general, such defects 64 may lower a resonant frequency of the powerplant component 22. However, it is contemplated the sensor data may also or alternatively be processed to determine whether or not the powerplant component 22 includes other material variations and/or flaws such as, but not limited to, corrosion, oxidation, spallation, erosion and/or the like. In general, such material variations may raise the resonant frequency of the powerplant component 22.

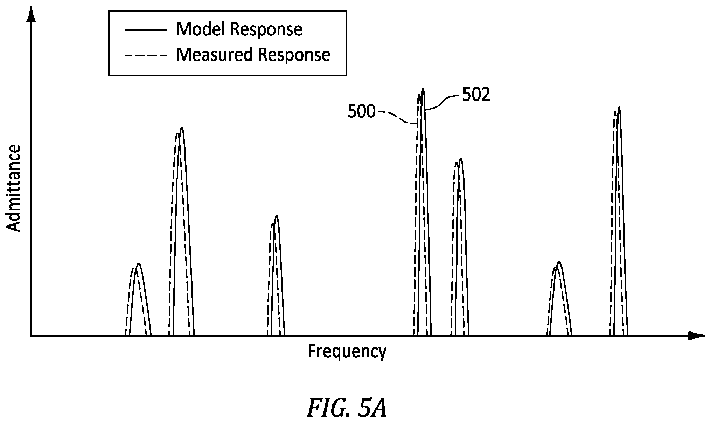

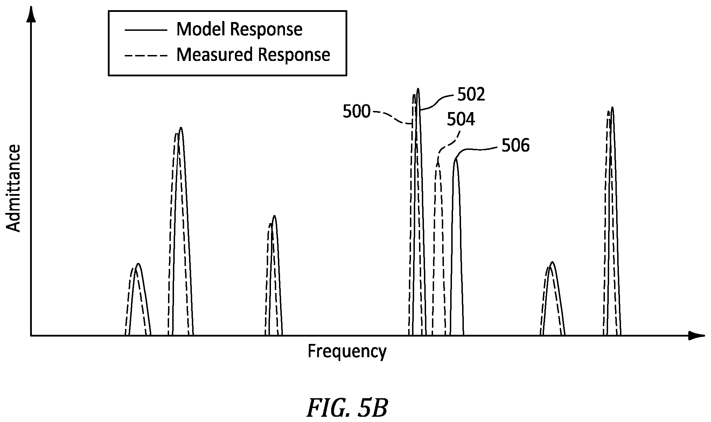

The control system 34 may analyze the measured vibratory response to determine resonant frequencies and/or other structural mode parameters for the powerplant component 22. Referring to FIG. 5A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the control system 34 may determine the powerplant component 22 does not include, or there is a low probability that the powerplant component 22 includes, any internal defects. For example, a measured resonance signature 500 of the measured resonant frequencies in FIG. 5A is the same as, or is within tolerance of, a model resonance signature 502 of expected resonant frequencies for the model component without any internal defects. Note, the matching model and measured responses are shown in FIGS. 5A and 5B slightly laterally offset for clarity of illustration. By contrast referring to FIG. 5B, where one or more of the resonant frequencies and/or other structural mode parameters do not match (or are outside tolerance of) the corresponding expected resonant frequencies and/or other structural mode parameters for the model component without any internal defects, the control system 34 may determine the powerplant component 22 does include, or there is a high probability that the powerplant component 22 includes, one or more internal defects 64. For example, the resonance signature 500 of the measured resonant frequencies in FIG. 5B includes an outlier resonant frequency 504 which is different than (e.g., does not align with) and is outside of tolerance of a corresponding resonant frequency 506 for the resonance signature 502 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 200 and the inspection system 20 may non-destructively identify presence of internal defect(s) 64 within the powerplant component 22 while that powerplant component 22 remains installed with the aircraft powerplant 24 and/or the aircraft powerplant 24 remains installed onboard the aircraft.

When the step 212 identifies presence of no internal defects in material of the powerplant component 22, information indicative of such may be presented on the display 32. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 212 identifies the presence of internal defect(s) 64, information indicative of such may be presented on the display 32. This information may simply identify the presence of internal defects 64. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 200 is described above identifying whether or not the inspected powerplant component 22 includes any internal defects 64, this inspection method 200 may also (or alternatively) be extended to determine one or more other physical characteristics about the inspected powerplant component 22.

In step 214, after performing the step 210 or the step 212, the inspection device 28 may be removed from the powerplant component 22. The inspection scope 36 and its scope head 48, for example, may be moved back towards the inspection device 28 such that the device mount 50 may recouple the inspection device 28 to the scope head 48 (e.g., see FIG. 1). The inspection scope 36 and its scope head 48 may then be moved away from the powerplant component 22 to physically break the adhesive bond between the inspection device 28 and the powerplant component 22. The inspection device 28 may then be removed from the interior 26 of the aircraft powerplant 24 along with the inspection scope 36. In another example, rather than (e.g., blindly) recoupling the scope head 48 to the inspection device 28 with the device mount 50, the electrical leads 56 may be used as a tether to pull against the inspection device 28 and physically break the adhesive bond between the inspection device 28 and the powerplant component 22. The inspection device 28 may then be removed from the interior 26 of the aircraft powerplant 24 along with (or independent of) the inspection scope 36. In still another example, in addition to or in alternative to physically breaking the adhesive bond between the inspection device 28 and the powerplant component 22 as described above, the inspection scope 36 (or another tool such as another inspection scope) may apply a solvent onto the adhesive 44. The adhesive bond between the inspection device 28 and the powerplant component 22 may thereby also or alternatively be chemically broken / dissolved.

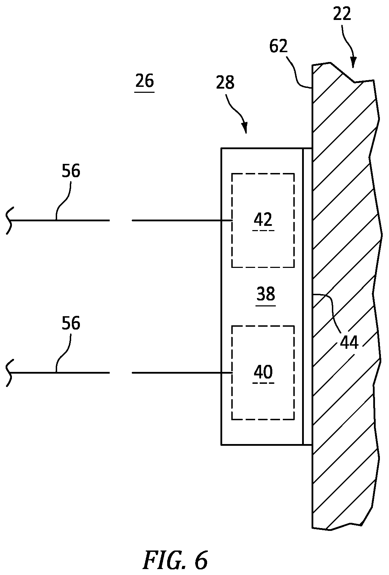

In other embodiments, referring to FIG. 6, rather than removing the inspection device 28 from the interior 26 of the aircraft powerplant 24, the inspection device 28 may be left within the interior 26 of the aircraft powerplant 24. The electrical leads 56 running to the inspection device 28, for example, may include fuses; e.g., mechanically weak points. With such an arrangement, after performing the step 210 or the step 212, the electrical leads 56 may be pulled away from the inspection device 28 such that the electrical leads 56 break and release from the inspection device 28. Here, the inspection device 28 may be configured (e.g., sized, constructed, etc.) to partially or completely decompose during an initial startup and/or an initial cycle of the aircraft powerplant 24. Thus, the inspection device 28 may be configured as a disposable inspection device; e.g., a disposable patch.

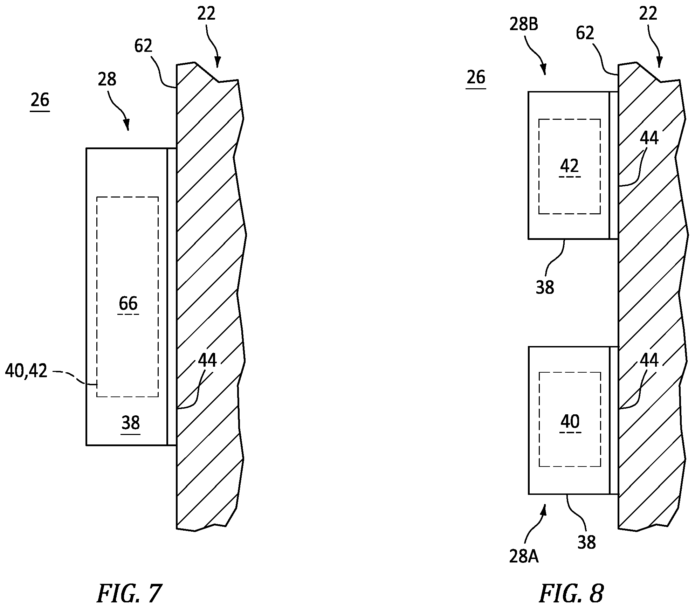

In some embodiments, referring to FIGS. 1 and 7, the inspection device 28 may include both the vibration actuator 40 and the vibration sensor 42. In FIG. 1, the vibration actuator 40 and the vibration sensor 42 are configured as discrete elements arranged with a common carrier 38. In FIG. 7, the vibration actuator 40 and the vibration sensor 42 are configured as a single device 66; e.g., a single piezoelectric device operable to both induce vibrations as well as measure a vibratory response. In other embodiments, referring to FIG. 8, the vibration actuator 40 and the vibration sensor 42 may be configured in discrete inspection devices 28A and 28B (generally referred to as "28") and may be discretely located along the powerplant component 22. The actuator inspection device 28A and the sensor inspection device 28B, for example, may be radially and/or circumferentially spaced from one another relative to a rotational axis of the powerplant component 22. The actuator inspection device 28A and the sensor inspection device 28B of FIG. 8 may each be placed (and removed) by a common tool. Alternatively, the actuator inspection device 28A and the sensor inspection device 28B of FIG. 8 may each be placed (and removed) by a different tool. The placement and/or the removal of each inspection device 28 may be performed as generally described above in the inspection method 200.

In some embodiments, each inspection device 28 may be configured with a single vibration actuator 40 and/or a single vibration sensor 42. In other embodiments, each inspection device 28 may be configured with multiple of the vibration actuators 40 and/or multiple of the vibration sensors 42. Moreover, it is contemplated multiple of the inspection devices 28 may be used for the inspection of the powerplant component 22. Each of these inspection devices 28 may include one or more of the vibration actuators 40 and/or one or more of the vibration sensors 42.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting an inspection device (28) into an interior (26) of a powerplant (24) using a tool (30, 36), the inspection device (28) comprising an actuator (40), and the powerplant (24) comprising a component (22) disposed within the interior (26) of the powerplant (24);
adhering the inspection device (28) to the component (22) within the interior (26) of the powerplant (24);
inducing vibrations in the component (22) using the actuator (40);
measuring a vibratory response in the component (22) excited by the vibrations using a sensor (42) to provide sensor data; and
determining a characteristic of the component (22) based on the sensor data.

2. The inspection method of claim 1, wherein the actuator (40) comprises a piezoelectric device.

3. The inspection method of claim 1 or 2, wherein the sensor (42) comprises a piezoelectric device.

4. The inspection method of claim 1, 2 or 3, wherein the inspection device (28) further comprises the sensor (42).

5. The inspection method of claim 1, 2 or 3, wherein the sensor (42) is configured discrete from the inspection device (28).

6. The inspection method of claim 5, further comprising:
inserting the sensor (42) into the interior (26) of the powerplant (24) using the tool (30, 36) or another tool; and
adhering the sensor (42) to the component (22) within the interior (26) of the powerplant (24).

7. The inspection method of any preceding claim, wherein the inspection device (28) is configured as a disposable patch.

8. The inspection method of any preceding claim, further comprising disengaging the tool (30, 36) from the inspection device (28) following the adhering of the inspection device (28) and prior to the inducing of the vibrations, and/or further comprising breaking away one or more electrical leads (56) from the inspection device (28) following the measuring of the vibratory response.

9. The inspection method of any preceding claim, further comprising removing the inspection device (28) from the component (22) following the measuring of the vibratory response.

10. The inspection method of claim 9, wherein the inspection device (28) is pulled off of the component (22) using the tool (30, 36), and/or the inspection device (28) is pulled off of the component (22) using one or more electrical leads (56) connected to the inspection device (28).

11. The inspection method of claim 9 or 10, wherein the removing of the inspection device (28) comprises applying a solvent onto an adhesive (44) adhering the inspection device (28) to the component (22).

12. The inspection method of any preceding claim, wherein the characteristic is indicative of presence of a defect internal to the component (22).

13. The inspection method of any preceding claim, wherein the powerplant (24) comprises a turbine engine, and/or wherein the component (22) is configured as a rotor disk.

14. The inspection method of any preceding claim, wherein the powerplant (24) is installed with an aircraft during the inserting, the adhering, the inducing and the measuring.

15. The inspection method of any preceding claim, wherein
the tool (30, 36) comprises an inspection scope (36); and
the inspection device (28) is coupled to a head (48) of the inspection scope (36) during the arranging of the inspection device (28) and the adhering of the inspection device (28).
